# EUROPÄISCHE PATENTANMELDUNG

(11) **EP 4 671 043 A1**
(43) Veröffentlichungstag der Anmeldung: **31.12.2025**
(21) Anmeldenummer: 25184503.8
(22) Anmeldetag: 23.06.2025
(51) Int. Cl.: B60P 3/06, E02F 9/00, E02F 3/28, E02F 3/40, E02F 9/20

(54) **MOBILISIEREINRICHTUNG**

(30) Priorität: 24.06.2024 DE 102024117762
(71) Anmelder: Echle Hartstahl GmbH, 77709 Wolfach (DE)
(72) Erfinder: Echle, Lothar, 77709 Oberwolfach (DE)
(74) Vertreter: Patentanwälte und Rechtsanwalt Weiß, Arat & Partner mbB

(57) **Zusammenfassung**

Bei einer Mobilisiereinrichtung für ein Arbeitsgerät sind eine Frontachseinheit und eine Heckachseinheit vorhanden, wobei die Frontachseinheit eine Arbeitsgerätanschlussstelle aufweist und die Heckachseinheit eine Heckkopplungsstelle aufweist.

## Beschreibung

### Technisches Gebiet

Die Erfindung betrifft ein Mobilisiereinrichtung nach dem Oberbegriff des Anspruchs 1.

### Stand der Technik

Derartige Mobilisiereinrichtungen sind bereits in vielfältiger Form und Ausgestaltung bekannt und gebräuchlich. So wird beispielsweise in der DE 10 2018 116 205 A1 ein Transportsystem und Transporter offenbart, welcher dem Transport einer selbstfahrenden Arbeitsmaschine auf einem Untergrund dient und dabei einen selbstfahrenden Transporter und die auf einer Maschinenplattform des Transporters angeordnete selbstfahrende Arbeitsmaschine umfasst. Die Arbeitsmaschine weist einen ersten Festleger und der Transporter einen zweiten Festleger auf, wobei die Festleger derart aneinander angepasst sind, dass durch ein Kontaktieren von Kontaktabschnitten der Kupplungselemente eine Wirkverbindung zwischen einem Maschinenenergiesystem der Arbeitsmaschine und einem Transporterenergiesystem des Transporters herstellbar ist. Durch das Transporterenergiesystem kann zumindest ein Antriebsmittel des Transporters mit Antriebsenergie versorgt werden, sodass eine Antriebsenergie des Transportsystems durch einen Antrieb der Arbeitsmaschine bereitstellbar ist.

### Aufgabe der Erfindung

Die Aufgabe der vorliegenden Erfindung ist es, die Nachteile aus dem Stand der Technik zu überwinden. Insbesondere soll eine Mobilisiereinrichtung bereitgestellt werden, die universell für unterschiedliche Arbeitsmaschinen einsetzbar ist und dabei eine Mobilisierung der Arbeitsmaschine beispielsweise für Strassenfahrten schnell und einfach ermöglicht.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemässe Mobilisiereinrichtung dient der Aufgabe, ein Arbeitsgerät von einem Startpunkt zu einem Zielpunkt zu bringen. Dazu weist sie erfindungsgemäss eine Frontachseinheit und eine Heckachseinheit auf, wobei die Frontachseinheit eine Arbeitsgerätanschlussstelle aufweist und die Heckachseinheit eine Heckkopplungsstelle aufweist.

Als Front wird im Rahmen der Erfindung definiert, dass die im ordnungsgemässen Normalbetrieb vorwärtsweisende Richtung angesehen wird. Als Heck wird im Rahmen der Erfindung definiert, dass die im ordnungsgemässen Normalbetrieb rückwärts weisende Richtung angesehen wird.

Bei der Frontachseinheit und der Heckachseinheit handelt es sich um zwei unterschiedliche Bauelemente, welche nur durch/nach Zwischenschaltung des Arbeitsgerätes miteinander verbunden werden. Sie weisen keine direkt zueinander führenden Leitungen oder funktionalen Befestigungsmittel auf.

Dabei ist vorgesehen, dass die Frontachseinheit und die Heckachseinheit für unterschiedliche Arbeitsgeräte genutzt werden können. Auf diese Weise können sich mehrere Arbeitsgeräte beispielsweise eine einzige Mobilisiereinrichtung bestehend aus Frontachseinheit und Heckachseinheit teilen und abwechselnd nutzen.

Zur Umsetzung der erfindungsgemässen Idee sind folgende Komponenten mit entsprechender Funktionsbeschreibung vorhanden. Die Frontachseinheit kann eine hydraulisch/elektrisch angetriebene, gelenkte und gebremste auswechselbare Ausführung sein.

In einem Ausführungsbeispiel besteht der Antrieb der Frontachseinheit aus zwei hydrostatischen Radnabenantrieben. Diese sind jeweils mit einer Betriebssowie Feststellbremse versehen und werden über die Leitungen der Arbeitsgerätehydraulik (z.B. Hammer oder Schere) mit Öl gespeist.

Die Frontachseinheit umfasst weiterhin eine Lenkbarkeit. Die Lenkbarkeit der Frontachseinheit wird dabei mit einer Lenkung des Arbeitsgerätes wirkverbunden. Das bedeutet im Einzelnen, dass ein Arbeitsgeräteführer aus einer Kabine des Arbeitsgerätes nach einer Kopplung des Arbeitsgerätes mit der Frontachseinheit mit den in der Kabine zur Verfügung stehenden Bedienungselementen auch die Lenkbarkeit der Frontachseinheit übernimmt.

Eine zusätzliche oder alternative Lenkbarkeit für die Heckachseinheit kann ebenfalls vorgesehen sein.

Zur Realisierung dieser Lenkbarkeit in Form beispielsweise einer Achsschenkellenkung sind beide Radnabenantriebe über Drehgelenke gelagert und mit einer Spurstange verbunden. Zur Umsetzung des Lenkeinschlags sind diese wiederum mit einem Lenkzylinder verbunden. Der Lenkzylinder wird über die Arbeitsgerätehydraulik (z.B. durch "Greifer drehen") betätigt.

In einem weiteren Ausführungsbeispiel ist der Antrieb der Frontachseinheit aus hydrostatischen Radnabenantrieben oder einem elektrischen Antrieb mit Übersetzung hin zur Achse ausgeführt. Die Radnabenantriebe sind jeweils mit einer Betriebs- sowie Feststellbremse versehen. Diese werden über den Arm des Arbeitsgerätes und den Leitungen der Arbeitsgerätehydraulik (z.B. Hammer/Schere) mit Öl gespeist.

Die Frontachseinheit umfasst einen Eigenantrieb mit Energiequelle. Das bedeutet, dass der Eigenantrieb eine eigene Energiequelle für die Fortbewegung und Lenkung aufweist. In einer Alternative kann sich die Energiequelle beispielsweise in Form eines Kraftstofftanks in der Frontachseinheit befinden. Der Eigenantrieb kann weiterhin ein Elektroantrieb sein, wobei dann die Energiequelle bevorzugt eine Batterie ist. Alternativ zur Batterie kann auch ein Wasserstofftank in Kombination mit einer Brennstoffzelle die notwendige Energie für den Elektroantrieb liefern. Der Elektroantrieb kann eine Rekuperation aufweisen.

Bei einer weiteren Möglichkeit zur Realisierung der Lenkung ist die Frontachseinheit über einen ausführungsabhängigen elektrischen oder hydraulischen Drehantrieb verbunden. Zusätzlich kann die Frontachseinheit ein Achsgestänge aufweisen, wobei optional eine Rekuperationsbremse oder in hydraulischer Ausführung eine Zusatzbremse vorgesehen sein kann.

Die Heckachseinheit ist eine Starr-Achse. Das bedeutet in erster Linie, dass sie keinen Eigenantrieb aufweisen muss. Allerdings kann sie ebenfalls einen Eigenantrieb aufweisen. Dabei kann es sich bei dem Eigenantrieb um einen Elektro-Antrieb, einen hydraulischen Antrieb oder dergleichen handeln.

Aus Gründen der Stabilität und Gewichtsaufnahme kann es in manchen Fällen vorgesehen sein, dass die Heckachseinheit ebenfalls mindestens zwei Achsen aufweist.

Die Starr-Achse weist weiterhin eine Klemm- und Spanneinrichtung auf, wobei vorliegend bevorzugt drei in Höhe und Weite einstellbare Klemm- und Spanneinrichtungen vorgesehen sind. Die Klemm- und Spanneinrichtungen dienen dem Einklemmen bzw. Einspannen eines Planier-/Stützschildes, welches an einem Heck des Arbeitsgerätes angeordnet ist.

**In** anderen Ausführungsbeispielen kann die Heckachseinheit und/oder die Frontachseinheit eine Auffahrrampe und einen Justage-Anschlag aufweisen. Dieser soll geeignet sein, dass beim Erreichen einer Endposition ein Heck oder eine Front eines Arbeitsgerätes in definierter Form aufgenommen und gekoppelt bzw. verbunden wird.

Die in Abfahrlage rückwärtig angebrachte Heckachseinheit wird so ausgeführt, dass das Arbeitsgerät diese mit seinem Raupenfahrwerk be- und auffahren kann. Die Befestigung der Heckachseinheit soll am Raupenfahrwerk mittels Spann- und Klemmelementen erfolgen.

Bei der Heckachseinheit handelt es sich um eine freilaufende Stützachse. Sie ist rückwärtig am Heck des Arbeitsgerätes vorgesehen. Sie dient der Umsetzung einer vierrädrigen Verfahrlösung und besteht dabei aus einem Massivachskörper in vorzugsweiser ungebremster Ausführung. Diese ist mit Klemm- und Spannelementen an einem Planier-/Stützschild zu befestigen.

Zur Erreichung der Abfahrlage wird die Frontachseinheit gleich eines Anbaugeräts über eine Arbeitsgeräteanschlussstelle in Form einer Schnellwechselaufnahme aufgenommen. Anschliessend erfolgt das Anbringen der Heckachseinheit am Planier-/Stützschild des Arbeitsgerätes. Zur Schaffung der benötigten Bodenfreiheit wird der Arm des Arbeitsgeräts abgesenkt und das Planier-/Stützschild oder Stützfüsse/Stützräder in Stützposition gebracht. Anstelle der Anbringung der Heckachseinheit am Planier-/Stützschild des Arbeitsgerätes kann ein Auffahren des Arbeitsgerätes auf die Heckachseinheit erfolgen.

Vor Fahrtantritt werden Achsabstände und die Bodenfreiheit gemäss spezifischer Werte des Arbeitsgerätes eingestellt. Dies geschieht über den maschinenseitigen Arm und dem Planier-/Stützschild. Fahr- sowie Lenk- und Bremsmanöver werden entsprechend den Funktionen an einen Joystick der Arbeitsgeräte-Bedienung eingeleitet.

Die Frontachseinheit ist in Abfahrlage entweder über das Arbeitsgerät mit der Heckachseinheit gekoppelt oder die Frontachseinheit ist mit der Heckachseinheit direkt gekoppelt. Als Abfahrlage wird im Rahmen der Erfindung definiert, wenn die Frontachseinheit und die Heckachseinheit in der Weise mit dem Arbeitsgerät verbunden sind, dass ein sofortiges Abfahren der Mobilisiereinrichtung mit dem Arbeitsgerät möglich ist.

Die beiden Achsabschnitte, d.h. die Frontachseinheit und die Heckachseinheit weisen jeweils mindestens zwei Räder auf. Es können auch je Achse vier Räder vorgesehen sein. Dies richtet sich nach dem Gewicht des Arbeitsgerätes und den Anforderungen an einen Untergrund. Bei den Rädern handelt es sich in der Regel um Vollgummi- oder Luftreifen. Alternativ können auch Reifen mit Spikes vorgesehen sein.

Im Allgemeinen besitzen die Frontachseinheit und die Heckachseinheit gemeinsam angedachte Umsetzungen im Bereich Elektrik und Hydraulik. Diese beziehen sich im Einzelnen auf die hydraulische Priorisierung der Betriebsbremse sowie die notwendige Beleuchtung und Fahrrichtungsanzeigen für Strassenfahrten, wobei die Umsetzung von Fahrmanövern über die vorhandenen Bedienelemente des Arbeitsgerätes erfolgen soll.

Die Betriebsbremsen der Frontachseinheit sowie der Heckachseinheit sollen unabhängig von ihrer Position und Einbauart über ein vorgeschaltetes Prioritätsventil betätigt werden. Hiermit soll sichergestellt werden, dass ein Lösen der Bremse priorisiert erfolgt und ein Druckbeaufschlagen des Antriebs erfordert. Umgekehrt gilt, dass bei umgeschaltetem Antrieb ein sofortiger Eingriff der Bremse erfolgt.

Die für Strassenfahrten notwendigen elektrischen Komponenten, wie Beleuchtung und Fahrtrichtungsanzeigen, sollen über die interne Stromversorgung des Arbeitsgerätes gewährleistet werden. Es ist angedacht, hierzu die benötigten Leuchten beispielsweise über separate Ausleger an Vorder- und Hinterachse zu befestigen und diese mit einer Bedienbox aus der Arbeitsgerätekabine zu betätigen. Die nötige Spannungszufuhr soll hierfür aus dem Arbeitsgerät zur Verfügung gestellt werden.

Es ist auch vorsehbar, dass die Heckachseinheit und/oder die Frontachseinheit mit einer zusätzlichen Batteriebox mit und ohne Bedieneinheit nachrüstbar ist, um auf diese Weise Strom über das Arbeitsgerät oder zusätzlich zur Verfügung zu haben. Ersatzweise oder zusätzlich kann diese Batteriebox und der damit verbundene Antrieb auch über Funk betätigt und gesteuert werden.

Alle zum Transport notwendigen Fahrmanöver sollen über die bereits im Arbeitsgerät vorhandenen Joystick Bedienelemente erfolgen. Hierzu wird für die Lenkung beispielsweise die Belegung der "Greifer drehen"-Funktion verwendet.

Für die Beschleunigung oder umgekehrt Bremsung soll beispielsweise die Eingabe über die Funktion der "Hammer/Schere" erfolgen.

Das Arbeitsgerät ist bevorzugt ein Bagger mit Arm.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Ansicht einer Mobilisiereinrichtung gemäss der vorliegenden Erfindung mit einem Arbeitsgerät;
Figur 2 eine Seitenansicht der Mobilisiereinrichtung nach Figur 1 mit dem Arbeitsgerät;
Figur 3 eine perspektivische Ansicht eines weiteren Ausführungsbeispiels einer erfindungsgemässen Mobilisiereinrichtung mit einem Arbeitsgerät;
Figur 4 eine Seitenansicht der Mobilisiereinrichtung nach Figur 3 mit dem Arbeitsgerät;
Figur 5 eine perspektivische Ansicht eines weiteren Ausführungsbeispiels einer erfindungsgemässen Mobilisiereinrichtung mit dem Arbeitsgerät;
Figur 6 eine Seitenansicht der Mobilisiereinrichtung nach Figur 5 mit dem Arbeitsgerät;
Figur 7 eine perspektivische Ansicht eines weiteren Ausführungsbeispiels einer erfindungsgemässen Mobilisiereinrichtung mit dem Arbeitsgerät; und
Figur 8 eine Seitenansicht der Mobilisiereinrichtung nach Figur 7 mit dem Arbeitsgerät.

### Ausführungsbeispiel

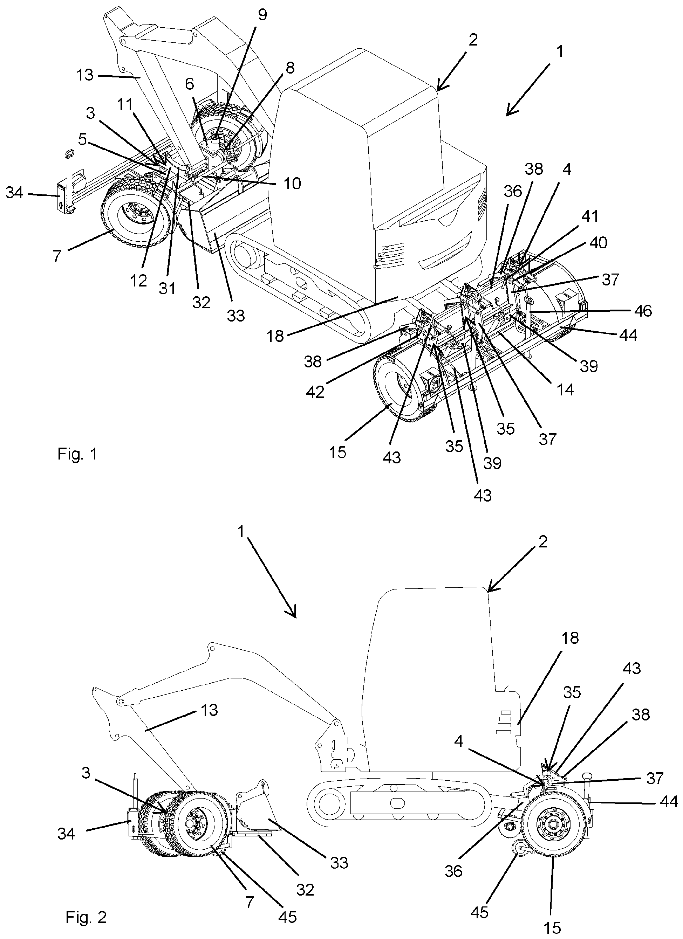

In den Figuren 1 und 2 ist eine Mobilisiereinrichtung 1 für ein Arbeitsgerät 2 gezeigt. Vorliegend ist die Mobilisiereinrichtung 1 ein Bagger. Die Mobilisiereinrichtung 1 weist eine Frontachseinheit 3 und eine Heckachseinheit 4 auf.

Die Frontachseinheit 3 umfasst einen Mittelträger 5, an dem jeweils endseitig über Verbindungsprofile 6 Räder 7 angeordnet sind. Ein Antrieb eines jeweiligen Rades 7 besteht aus einem hydrostatischen Radnabenantrieb 8. Alternativ kann auch ein Elektroantrieb vorgesehen sein. Die Frontachseinheit 3 weist weiterhin eine Lenkbarkeit, vorzugsweise die Möglichkeit einer Achsschenkellenkung auf. Zur Realisierung einer Achsschenkellenkung sind beide Radnabenantriebe 8 jeweils über ein Drehgelenk 9 in jeweils einem Verbindungsprofil 6 gelagert und mit einer Spurstange 10 verbunden. Zur Umsetzung eines Lenkeinschlags ist zumindest einer der Radnabenantriebe 8 wiederum mit einem nicht näher gezeigten Lenkzylinder verbunden. Der Lenkzylinder wird über eine Hydraulik des Arbeitsgerätes 2 betätigt. Eine Lenkbarkeit der Frontachseinheit 3 ist folglich mit einer Lenkung des Arbeitsgerätes 2 wirkverbunden.

Die Radnabenantriebe 8 sind weiterhin jeweils mit einer nicht näher gezeigten Betriebs- sowie Feststellbremse versehen, die über ebenfalls nicht näher gezeigte Leitungen einer Arbeitsgerätehydraulik mit Öl gespeist wird.

An dem Mittelträger 5 der Frontachseinheit 3 ist weiterhin eine Arbeitsgeräteanschlussstelle 11 in Form eines Schnellwechselsystem bestehend aus einer Schnellwechselaufnahme 12 und optional eines Adapters 31 vorgesehen, welches der auswechselbaren Aufnahme eines Armes 13 des Arbeitsgerätes 2 dient. Schnellwechselsysteme sind grundsätzlich in vielfältigster Form und Ausgestaltung bekannt und gebräuchlich und ermöglichen einen schnellen Wechsel zwischen verschiedenen Einsatzwerkzeugen der Mobilisiereinrichtung 1, wie bspw. einer Baggerschaufel oder dergleichen. Die Arbeitsgeräteanschlussstelle bzw. das Schnellwechselsystem kann auch ohne Adapter verwendet werden. Zugehörige (Verbindungs-)Leitungen zwischen dem Arbeitsgerät 2 und den unterschiedlichen Einsatzwerkzeugen bzw. dem Arm 13 sind der Überschaubarkeit halber nicht gezeigt.

An dem Mittelträger 5 kann weiterhin ein Ausleger 32 zur Aufnahme von Ausrüstung 33, vorliegend einer Baggerschaufel, vorgesehen sein. Darüber hinaus kann ein weiterer Ausleger 34 zur Aufnahme von für Strassenfahrten notwendigen elektrischen Komponenten, wie Beleuchtung und Fahrtrichtungsanzeigen, vorgesehen sein.

Die Frontachseinheit 3 umfasst weiterhin einen nicht näher gezeigten Eigenantrieb mit Energiequelle, vorzugsweise in der Form eines Elektroantriebes mit einer Batterie als Energiequelle. Der Elektroantrieb kann darüber hinaus die Möglichkeit einer Rekuperation aufweisen.

Die Heckachseinheit 4 umfasst in der Regel ebenfalls einen Massivachskörper 14 in vorzugsweise ungebremster Ausführung. D.h., der Massivachskörper ist eine Starr-Achse 14. Jeweils endseitig ist ein Rad 15 an der Starr-Achse 14 angeordnet. Die Starr-Achse 14 weist weiterhin eine Klemm- und Spanneinrichtung 35 auf, wobei vorliegend bevorzugt drei Klemm- und Spanneinrichtungen 35 vorgesehen sind. Die Klemm- und Spanneinrichtungen 35 dienen dem Einklemmen bzw. Einspannen eines Planier-/Stützschildes 36, welches an einem Heck 18 des Arbeitsgerätes 2 angeordnet ist.

Die Klemm- und Spanneinrichtungen 35 weisen jeweils ein Grundgestänge 37 auf, welches wiederum ein oberes Klemm- und Spannelement 38 sowie ein unteres Klemm- und Spannelement 39 aufweist, welche miteinander in Wirkverbindung bringbar sind. Der Begriff "unteres Klemm- und Spannelement" bedeutet hier, dass das Klemm- und Spannelement 39 an dem Grundgestänge 37 in Bodennähe angeordnet ist. Der Begriff "oberes Klemm- und Spannelement" bedeutet hier, dass das Klemm- und Spannelement 38 an einem dem Boden entfernt liegenden Bereich des Grundgestänges 37 angeordnet ist.

Eine Einstellmöglichkeit von Weite und Höhe der Klemm- und Spannelemente 38 und 39 - je nach Grösse und Umfang des aufzunehmendem Planier-/Stützschildes 36 - erfolgt über die oberen Klemm- und Spannelemente 38. Diese weisen Rastbohrungen 40 auf, welche über Rastbolzen 41 mit entsprechenden Rastbohrungen 42 des Grundgestänges 37 in Eingriff bringbar sind. Die unteren Klemm- und Spannelemente 39 weisen vorliegend diese Möglichkeit der Einstellung nicht auf. Dies kann jedoch im Rahmen der Ausgestaltung vorgesehen sein.

Sowohl die Klemm- und Spannelemente 38 als auch die Klemm- und Spannelemente 39 sind über Zylinder 43 mit dem Grundgestänge 37 oder einem Ausleger 44 verbunden. Die Zylinder 43 können hydraulische, pneumatische oder dergleichen Zylinder sein und sowohl die Klemm- und Spannelemente 38 als auch die Klemm- und Spannelemente 39 gemeinsam oder separat steuerbar machen. Die Zylinder 43 können dabei in der Länge veränderbar und federnd ausgeführt sein. Anstelle der Zylinder 43 können aber auch einfache, längenveränderliche Verbindungsstangen vorgesehen sein. Wichtig ist, dass sie gegebenenfalls ein Lösen der Klemm- und Spannwirkung der Klemm- und Spannelemente 38 und/oder der Klemm- und Spannelemente 39 verhindern.

Auch an der Star-Achse 14 der Heckachseinheit 4 kann der Ausleger 44 zur Aufnahme von für Strassenfahrten notwendigen elektrischen Komponenten, wie Beleuchtung und Fahrtrichtungsanzeigen, vorgesehen sein.

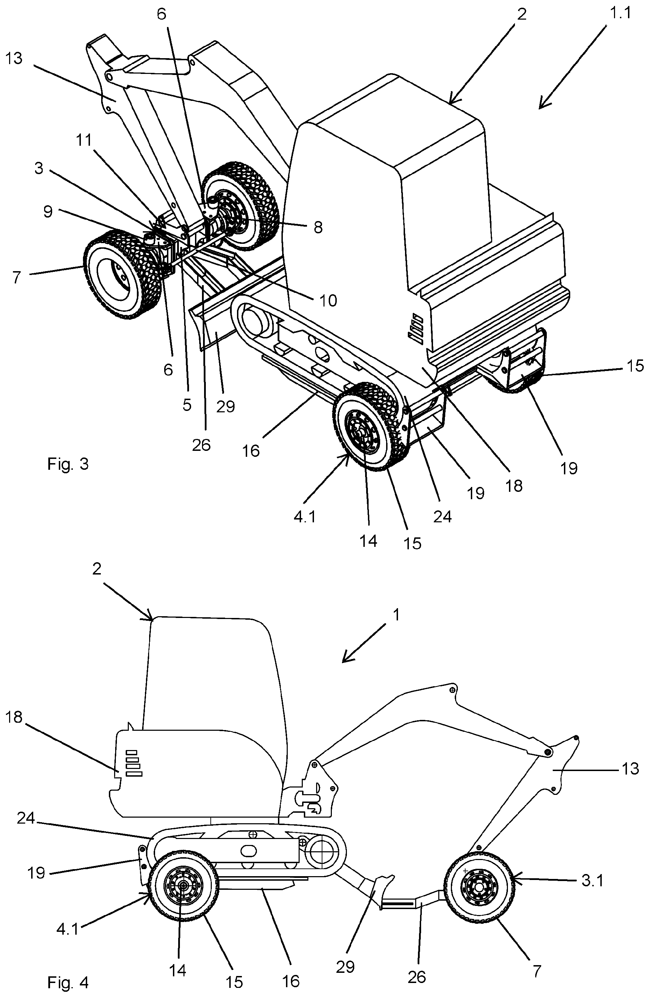

Gemäss den Figuren 3 und 4 ist eine weiteres Ausführungsbeispiel einer erfindungsgemässen Mobilisiereinrichtung 1.1 mit dem Arbeitsgerät 2 gezeigt.

Neben den in den Figur 1 und 2 bereits beschriebenen Merkmalen ist die Fronachseinheit 3.1 in diesem Ausführungsbeispiel ohne Ausleger 32 zur Aufnahme von Ausrüstung 33 vorgesehen. Stattdessen kann eine Gabelverbindung 46 vorgesehen sein, welche sich in Transportlage des Arbeitsgerätes 2 gegen ein Planier-/Stützschild 29 des Arbeitsgerätes 2 abstützen kann, um mehr Stabilität der Mobilisiereinrichtung 1.1 und des Arbeitsgerätes 2 zu gewährleisten.

Ein Ausleger zur Aufnahme von für Strassenfahrten notwendigen elektrischen Komponenten, wie Beleuchtung und Fahrtrichtungsanzeigen, ist vorliegend ebenfalls nicht dargestellt, kann jedoch ohne weiteres vorgesehen sein.

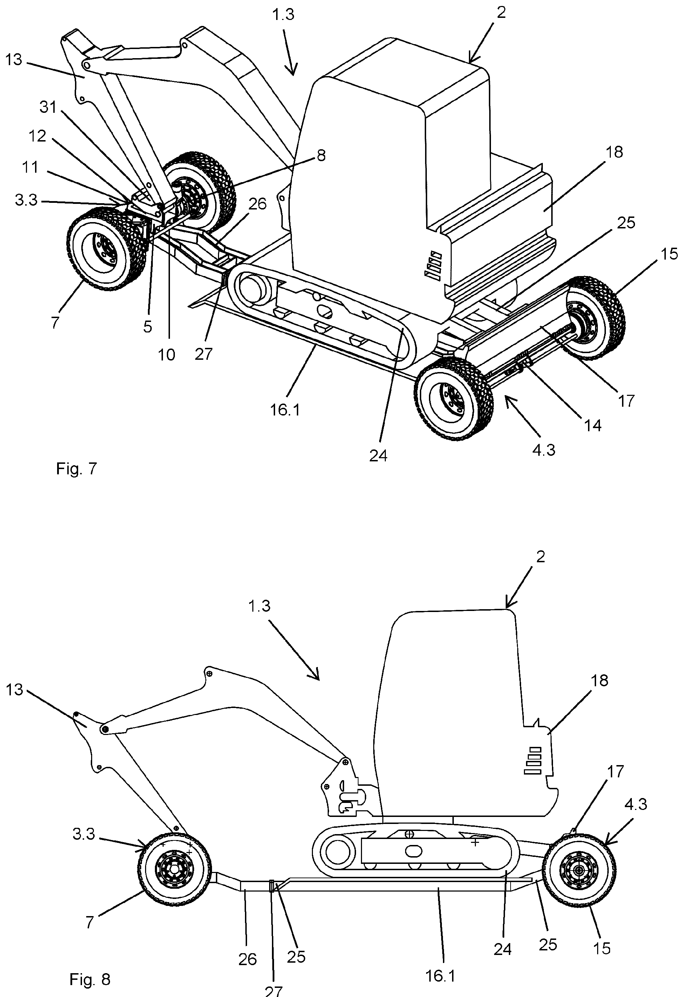

Die Heckachseinheit 4.1 umfasst auch hier einen Massivachskörper 14 in vorzugsweise ungebremster Ausführung. D.h., der Massivachskörper ist die Starr-Achse 14. Jeweils endseitig ist das Rad 15 an der Starr-Achse 14 angeordnet. Die Starr-Achse 14 kann über nicht näher dargestellte Klemm- und Spannelemente an einer Auffahrrampe 16 der Heckachseinheit 4.1 oder an einem Raupenfahrwerk 24 des Arbeitsgerätes 2 (siehe Figuren 3 bis 6) oder einem Planier-/Stützschild 17 der Heckachseinheit 4.3 (siehe Figur 7 und 8) angeordnet sein/werden.

Die Auffahrrampe 16 und ein Justage-Anschlag 19 sind somit Teil der Heckachseinheit 4.1 und wirken als Heckkopplungsstelle. Sie dienen dem Erreichen einer definierten Endposition des Arbeitsgerätes 2 auf der Auffahrrampe 16 und der Aufnahme und Kopplung des Hecks 18 des Arbeitsgerätes 2 mit der Heckachseinheit 4.1.

Die Frontachseinheit 3 wiederum ist in Abfahrlage der Mobilisiereinrichtung 1.1 entweder über das Arbeitsgerät 2 mit der Heckachseinheit 4.1 gekoppelt oder die Frontachseinheit 3.1 ist mit der Heckachseinheit 4.1 direkt gekoppelt.

Ansonsten gelten die Ausführungen zu den Figuren 1 und 2 auch zu den Figuren 3 bis 8. Dies insbesondere dann, wenn die gleichen Merkmale mit den gleichen Bezugsziffern versehen wurden. Daher wird auf eine Wiederholung aller in den Figuren 1 und 2 beschriebenen Merkmale verzichtet.

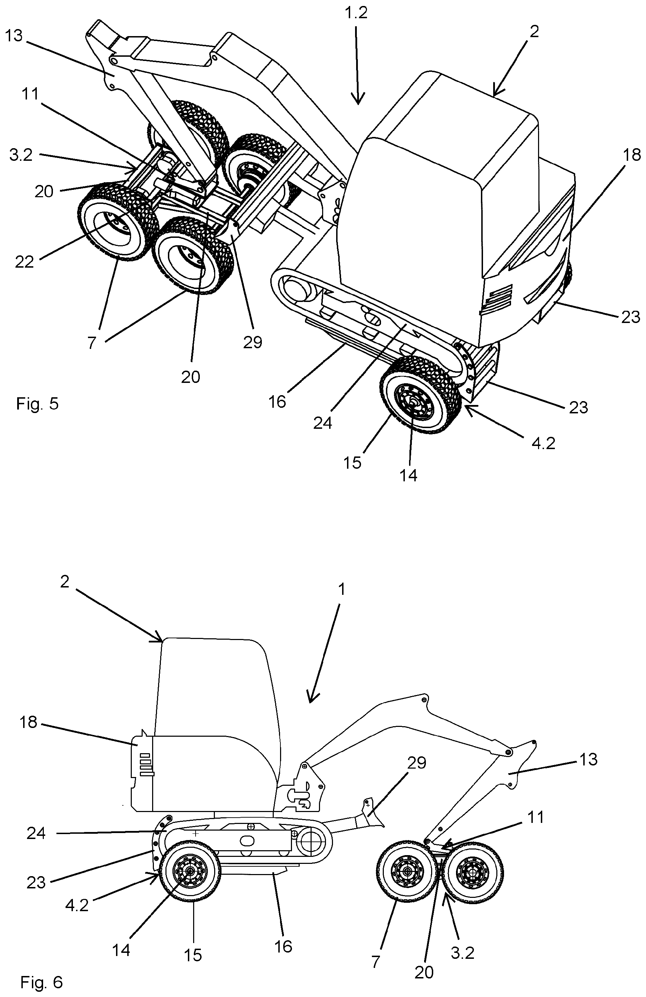

Gemäss den Figuren 5 und 6 ist eine weiteres Ausführungsbeispiel einer erfindungsgemässen Mobilisiereinrichtung 1.2 mit dem Arbeitsgerät 2 gezeigt. Neben den in den Figuren 1 bis 4 bereits beschriebenen Merkmalen weist die hier gezeigte Frontachseinheit 3.2 anstelle des Mittelträgers ein Achsgestänge 20 auf, an welchem insgesamt vier Räder 7 per Einzelradaufhängung angebracht sind. Zur Realisierung der Lenkung ist die Frontachseinheit 3.2 über einen ausführungsabhängigen elektrischen/hydraulischen Drehantrieb 22 versehen. Eine Lenkung erfolgt ohne Lenkachse, sondern nur mit Hilfe des Drehantriebs 22. Das Achsgestänge 20 kann optional mit einer Rekuperationsbremse oder in hydraulischer Ausführung mit einer Zusatzbremse versehen sein.

Ein Antrieb der Frontachseinheit 3.2 kann, wie bereits oben ausgeführt, mit hydrostatischen Radnabenantrieben 8 oder aber einem nicht näher gezeigten elektrischen Antrieb ausgeführt sein. Die Radnabenantriebe 8 oder aber die elektrischen Antriebe sind jeweils mit einer nicht näher gezeigten Betriebssowie Feststellbremse versehen. Diese werden über den Arm 13 bzw. den nicht näher gezeigten Leitungen der Arbeitsgerätehydraulik mit Öl gespeist. Alternativ soll sich eine Energieeinheit beispielsweise in Form eines Akkus in der Mobilisiereinrichtung 1.2 befinden.

Was die Heckachseinheit 4.2 angeht, so ist nur ein Justage-Anschlag 23 anders ausgeführt als der Justage-Anschlag 19 der Figuren 3 und 4. Der Justage-Anschlag 23 kann in seiner Ausführung gemäss den Figuren 5 und 6 einen weiteren Bereich der umlaufenden Raupen/Ketten 24 aufnehmen als das der Justage-Anschlag 19 kann.

Natürlich kann auch die Heckachseinheit 4.2 mindestens eine weitere Achse aufweisen, wenn dies erforderlich sein sollte.

Gemäss den Figuren 7 und 8 weist die Frontachseinheit 3.3 ebenfalls das Gabelgestänge 26 auf, welches dem Anschluss der Frontachseinheit 3.3 an ein Verbindungsgestänge 25, welches auf einer einem Untergrund zugewandten Unterseite der Auffahrrampe 16.1 der Heckachseinheit 4.3 angeordnet ist. Auf einer der Frontachseinheit 3.3 gegenüberliegenden Seite der Auffahrrampe 16.1 mündet das Verbindungsgestänge 25 in der Starr-Achse 14 der Heckachseinheit 4.3 und ist mit dieser verbunden.

Um das Gabelgestänge 26 mit dem Verbindungsgestänge 25 zu verbinden, sind diese endseits mit komplementären Kopplungsplatten 27 versehen. Diese Kopplungsplatten 27 des Gabelgestänges 26 und des Verbindungsgestänges 25 können über beispielsweise entsprechende, nicht näher gezeigte Bolzen wieder lösbar miteinander verbunden werden.

Die Heckachseinheit 4.3 ist darüber hinaus, wie oben bereits beschrieben, mit seiner Starr-Achse 14 über nicht näher dargestellte Klemm- und Spannelemente an dem Planier-/Stützschild 17 der Heckachseinheit 4.3 angeordnet.

Dieses Ausführungsbeispiel einer Mobilisiereinrichtung 1.3 ist folglich ohne Justage-Anschlag ausgebildet. Stattdessen bildet quasi das Planierschild 17 in Verbindung mit der damit verbundenen Heckachseinheit 4.3 den Anschlag für das Arbeitsgerät 2.

Bezugnehmend auf die Figuren 1 bis 8 erklärt sich die Funktionsweise der erfindungsgemässen Mobilisiereinrichtung folgendermassen:
Muss ein Arbeitsgerät 2 zu einem anderen Einsatzort verbracht werden, so wird zunächst ein mit dem Arm 13 des Arbeitsgerät 2 gekoppeltes Einsatzwerkzeug (nicht dargestellt) abgenommen. Anstelle des Einsatzwerkzeuges kann über das Arbeitsgeräteanschlussstelle 11 bzw. die Schnellwechselaufnahme 12 und gegebenenfalls den Adapter 31 der Frontachsantrieb 3, 3.1, 3.2 oder 3.3 aufgenommen bzw. angeschlossen werden.

Anschliessend erfolgt im Falle des Ausführungsbeispiels nach den Figuren 1 und 2 das Koppeln des Arbeitsgerätes 2 mit der Heckachseinheit 4, wobei das Planier-/Stützschildes 36 am Heck 18 des Arbeitsgerätes 2 in den Klemm- und Spanneinrichtungen 35 aufgenommen und festgehalten wird.

Im Falle der Ausführungsbeispiele nach den Figuren 3 und 4 bzw. 5 und 6 erfolgt das Koppeln des Arbeitsgerätes 2 mit der Heckachseinheit 2.1 bzw. 4.2 über das Auffahren des Arbeitsgerätes 2 auf die Auffahrrampe 16 der Heckachseinheit 4.1 bzw. 4.2 und das Koppeln durch den Justage-Anschlag 19 bzw. 23.

Im Falle der Heckachseinheit 4.3 des Ausführungsbeispiels nach den Figuren 7 und 8 wird diese am Planier-/Stützschild 17 des Arbeitsgerätes 2 angeordnet, wie oben bereits beschrieben.

Zur Schaffung der benötigten Bodenfreiheit wird bei den Ausführungsbeispielen gemäss den Figuren 3 und 4, 5 und 6 bzw. 7 und 8 der Arm 13 des Arbeitsgerätes 2 abgesenkt und ein vorhandenes Planier-/Stützschild - heckseitig ist es das Planier-/Stützschild 17, frontseitig ist es ein Planier-/Stützschild 29 - in Stützposition gebracht. Für das Ausführungsbeispiel gemäss den Figuren 1 und 2 können die Frontachseinheit 3 und die Heckachseinheit 4 mit verstellbaren Stützrädern 45 oder Stützfüssen 46 versehen sein.

Vor Fahrtantritt werden Achsabstände und eine Bodenfreiheit gemäss spezifischer Werte für das Arbeitsgerät 2 eingestellt. Fahr- sowie Lenk- und Bremsmanöver werden entsprechend den Funktionen an einem nicht näher gezeigten Joystick einer Bedienung des Arbeitsgerätes 2 eingeleitet. Alternativ kann eine Fernbedienung für Teile der Steuerung oder für die gesamte Steuerung vorgesehen sein. Ist das Arbeitsgerät 2 an seinem neuen Einsatzort angekommen, können die Frontachseinheit 3, 3.1, 3.2 bzw. 3.3 sowie die Heckachseinheit 4, 4.1, 4.2 bzw. 4.3 gelöst werden bzw. das Arbeitsgerät 2 abgesetzt bzw. von der Auffahrrampe 16, 16.1 heruntergefahren werden. Anschliessend kann der Arm 13 mit einem entsprechend benötigten Einsatzwerkzeug bestückt werden und mit dem Arbeitsgerät 2 kann weitergearbeitet werden.

### Bezugszeichenliste

| | | | |
|---|---|---|---|
| 1 | Mobilisiereinrichtung | 39 | Klemm-/Spannelement |
| 2 | Arbeitsgerät | 40 | Rastbohrung |
| 3 | Frontachseinheit | 41 | Rastbolzen |
| 4 | Heckachseinheit | 42 | Rastbohrung |
| 5 | Mittelträger | 43 | Zylinder |
| 6 | Verbindungsprofil | 44 | Ausleger |
| 7 | Rad | 45 | Stützrad |
| 8 | Radnabenantrieb | 46 | Stützfuss |
| 9 | Drehgelenk | | |
| 10 | Spurstange | | |
| 11 | Arbeitsgeräteanschlussstelle/Sch nellwechselsystem | | |
| 12 | Schnellwechselaufnahme | | |
| 13 | Arm | | |
| 14 | Starr-Achse | | |
| 15 | Rad | | |
| 16 | Auffahrrampe | | |
| 17 | Planier-/Stützschild (heckseitig) | | |
| 18 | Heck | | |
| 19 | Justage-Anschlag | | |
| 20 | Achse | | |
| 21 | | | |
| 22 | Drehantrieb | | |
| 23 | Justage-Anschlag | | |
| 24 | Raupen/Ketten | | |
| 25 | Verbindungsgestänge | | |
| 26 | Gabelgestänge | | |
| 27 | Kopplungsplatten | | |
| 28 | | | |
| 29 | Planier-/Stützschild (frontseitig) | | |
| 30 | | | |
| 31 | Adapter | | |
| 32 | Ausleger | | |
| 33 | Baggerschaufel | | |
| 34 | Ausleger | | |
| 35 | Klemm-/Spanneinrichtung | | |
| 36 | Planier-/Stützschild | | |
| 37 | Grundgestänge | | |
| 38 | Klemm-/Spannelement | | |

## Patentansprüche

1. Mobilisiereinrichtung (1, 1.1, 1.2, 1.3) für ein Arbeitsgerät (2),
**dadurch gekennzeichnet,**
**dass** eine Frontachseinheit (3, 3.1, 3.2, 3.3) und eine Heckachseinheit (4, 4.1, 4.2, 4.3) vorhanden sind, wobei die Frontachseinheit (3, 3.1, 3.2, 3.3) eine Arbeitsgeräteanschlussstelle (11) aufweist und die Heckachseinheit (4, 4.1, 4.2, 4.3) eine Heckkopplungsstelle aufweist.

2. Mobilisiereinrichtung (1, 1.1, 1.2, 1.3) nach Anspruch 1, **dadurch gekennzeichnet, dass** die Frontachseinheit (3, 3.1, 3.2, 3.3) und/oder die Heckachseinheit (4, 4.1, 4.2, 4.3) einen Eigenantrieb mit Energiequelle umfasst.

3. Mobilisiereinrichtung (1, 1.1, 1.2, 1.3) nach Anspruch 1 oder 2, **dadurch gekennzeichnet, dass** der Eigenantrieb ein Elektroantrieb ist und die Energiequelle eine Batterie.

4. Mobilisiereinrichtung (1, 1.1, 1.2, 1.3) nach Anspruch 3, **dadurch gekennzeichnet, dass** die Frontachseinheit (3, 3.1, 3.2, 3.3) mit dem Elektroantrieb eine Rekuperation aufweist.

5. Mobilisiereinrichtung (1, 1.1, 1.2, 1.3) nach einem der vorigen Ansprüche, **dadurch gekennzeichnet, dass** die Frontachseinheit (3, 3.1, 3.2, 3.3) und die Heckachseinheit (4, 4.1, 4.2, 4.3) jeweils mindestens zwei Räder aufweisen.

6. Mobilisiereinrichtung (1, 1.1, 1.2, 1.3) nach einem der vorigen Ansprüche, **dadurch gekennzeichnet, dass** die Frontachseinheit (3, 3.1, 3.2, 3.3) eine Lenkbarkeit umfasst.

7. Mobilisiereinrichtung (1, 1.1, 1.2, 1.3) nach einem der vorigen Ansprüche, **dadurch gekennzeichnet, dass** die Heckachseinheit (4, 4.1, 4.2, 4.3) eine Starr-Achse (14) umfasst.

8. Mobilisiereinrichtung (1, 1.1, 1.2, 1.3) nach einem der vorigen Ansprüche, **dadurch gekennzeichnet, dass** die Frontachseinheit (3) ein Achsgestänge (20) aufweist.

9. Mobilisiereinrichtung (1, 1.1, 1.2, 1.3) nach einem der vorigen Ansprüche, **dadurch gekennzeichnet, dass** die Heckachseinheit mindestens zwei Achsen aufweist.

10. Mobilisiereinrichtung (1, 1.1, 1.2, 1.3) nach einem der vorigen Ansprüche, **dadurch gekennzeichnet, dass** die Heckachseinheit (4.1, 4.2) eine Auffahrrampe (16, 16.1) und einen Justage-Anschlag (19, 23) aufweist, geeignet beim Erreichen einer Endposition ein Heck (18) des Arbeitsgerätes (2) aufzunehmen und zu koppeln.

11. Mobilisiereinrichtung (1, 1.1, 1.2, 1.3) nach einem der vorigen Ansprüche, **dadurch gekennzeichnet, dass** die Frontachseinheit (3, 3.1, 3.2, 3.3) in Abfahrlage entweder über das Arbeitsgerät (2) mit der Heckachseinheit (4, 4.1, 4.2, 4.3) gekoppelt ist oder die Frontachseinheit (3, 3.1, 3.2, 3.3) mit der Heckachseinheit (4, 4.1, 4.2, 4.3) direkt gekoppelt ist.

12. Mobilisiereinrichtung (1, 1.1, 1.2, 1.3) nach einem der vorigen Ansprüche, **dadurch gekennzeichnet, dass** die Lenkbarkeit der Frontachseinheit (3, 3.1, 3.2, 3.3) und/oder der Heckachseinheit (4, 4.1, 4.2, 4.3) mit einer Lenkung des Arbeitsgerätes (2) wirkverbunden ist.

13. Verwendung einer Mobilisiereinrichtung (1, 1.1, 1.2, 1.3) nach den Ansprüchen 1 bis 12 **gekennzeichnet durch** folgende Schritte:
- Kopplung des Arms (13) des Arbeitsgerätes (2) mit der Fronachseinheit (3, 3.1, 3.2, 3.3) und/oder der Heckachseinheit (4, 4.1, 4.2, 4.3)
- Kopplung des Arbeitsgerätes (2) mit der Frontachseinheit (3, 3.1, 3.2, 3.3) und/oder der Heckachseinheit (4, 4.1, 4.2, 4.3).
